# EUROPÄISCHE PATENTSCHRIFT

(11) **EP 1 145 536 B1**
(45) Veröffentlichungstag und Bekanntmachung des Hinweises auf die Patenterteilung: **11.07.2007**
(21) Anmeldenummer: 00951196.5
(22) Anmeldetag: 06.06.2000
(51) Int. Cl.: H04M 11/04

(54) **VERFAHREN UND VORRICHTUNG ZUM MELDEN UND AUSWERTEN EINES GEFAHRENZUSTANDES**
METHOD AND DEVICE FOR REPORTING AND EVALUATING A DANGER SITUATION
PROCEDE ET DISPOSITIF POUR SIGNALER ET EVALUER UNE SITUATION DE DANGER

(30) Priorität: 07.06.1999 DE 19925832
(43) Veröffentlichungstag der Anmeldung: 17.10.2001
(73) Patentinhaber: SVG Sicherheitsverwaltungs AG, 26384 Wilhelmshaven (DE)
(72) Erfinder: WILHELMS, Otto, D-26345 Bockhorn (DE); POPPINGA, Wolfgang, D-26389 Wilhelmshaven (DE)
(74) Vertreter: Siekmann, Gunnar
(86) Internationale Anmeldenummer: PCT/DE2000/001802
(87) Internationale Veröffentlichungsnummer: WO 2000/076196

(56) Entgegenhaltungen:
- WO-A-98/30011
- US-A- 5 109 399

## Beschreibung

Die Erfindung betrifft ein Verfahren zum Melden und Auswerten eines eines Gefahrenzustandes, wobei zum Melden des Zustandes ein gewöhnlicher Telefonapparat verwendet wird, bei Eintritt des Zustandes eine Auswerteeinrichtung angerufen wird, und die über das Telefonleitungsnetz übertragende Telefonnummer des Telefonapparates in der Auswerteeinrichtung mit einer in der Auswerteeinrichtung bekannten Telefonnummer zu dem anrufenden Telefonapparat verglichen wird.

Die Erfindung betrifft weiterhin eine Vorrichtung zur Durchführung des Verfahrens zum Melden und Auswerten eines Gefahrenzustandes; mit wenigstens einer Ausloseeinrichtung, einer Übertragungseinrichtung und zumindestens einer Auswerteeinrichtung nach dem Oberbegriff des Patentanpruchs 3.

Bei bekannten Verfahren der eingangs genannten Gattung kann eine Meldung über einen Zustand, insbesondere über einen Gefahrenzustand, zwischen zwei Personen fernmündlich vorgenommen werden. Ein Gefahrenzustand tritt beispielsweise dadurch ein, daß in einen privaten Haushalt oder auch in ein öffentliches Gebäude eingebrochen wird. Andere Gefahrenzustände entstehen zum Beispiel beim Ausfall technischer Anlagen. Derartige Verfahren sind aus der US 5,109,399 und der WO 98/30011 bekannt.

Eine fernmündliche Meldung über diese Gefahrenzustände ist dann erforderlich, wenn Personen oder Institutionen, die auf diese Gefahrenzustände mit Maßnahmen reagieren können, vom Ort des Geschehens entfernt sind. Beispielsweise ist es bei einem Einbruch in einen privaten Haushalt für den Betroffenen erforderlich, den Einbruch bei einer Notrufzentrale zu melden. Dazu wird diese Notrufzentrale von dem Betroffenen angerufen, woraufhin in einem Telefongespräch die Einzelheiten des Gefahrenzustandes besprochen werden. Von der Notrufzentrale wird dann eine entsprechende Reaktion, beispielsweise ein Einsatz von Sicherheitsorganen, veranlaßt.

Durch dieses Verfahren ist eine Reaktion der Notrufzentrale auf einen Gefahrenzustand gesichert. Nachteilig ist aber, daß vor Einleiten von Reaktionsmaßnahmen zunächst in einem fernmündlichen Gespräch zu erörtern ist, um welchen Gefahrenzustand es sich handelt und welche Maßnahmen erforderlich sind. Dadurch vergeht Zeit, die oftmals derart lang ist, daß eine wirksame Reaktion auf den Gefahrenzustand nicht mehr vollständig oder gar nicht mehr möglich ist.

Der Erfindung liegt die Aufgabe zugrunde, ein Verfahren der eingangs genannten Gattung aufzuzeigen, mit dem eine möglichst schnelle Meldung und Auswertung eines Zustandes, insbesondere eines Gefahrenzustandes, möglich ist.

Diese Aufgabe ist erfindungsgemäß dadurch gelöst, daß in der Auswerteeinrichtung die bekannte Telefonnummer des Telefonapparates in einem Speicher bereitgestellt wird und bei maschinellem Feststellen einer Übereinstimmung beider Telefonnummern ohne Vorhalten eines Operators automatisch erkannt wird, daß im Bereich des Telefon apparates ein Gefahren zustand herrcht und es werden für den Zustand definierte, vorher festgelegte Maßnahmen eingeleitet.

Bei dem erfindungsgemäßen Verfahren wird die fortschreitende Entwicklung des Telefonleitungsnetzes, insbesondere dessen Digitalisierung, genutzt. Diese Weiterentwicklung des Telefonnetzes hat bewirkt, daß bei jedem über dieses Netz geführten Telefonat die Telefonnummer des anrufenden Telefonapparates in Form eines digitalen Signals an die angerufene Gegenstelle übertragen wird. Die Übertragung erfolgt automatisch, ohne daß es dafür einer Handlung des Anrufenden bedarf.

Bei dem erfindungsgemäßen Verfahren wird diese automatisch übertragene Information über die Telefonnummer des anrufenden Telefonapparates dazu genutzt, einen in der Umgebung dieses Telefonapparates eingetretenen Gefahrenzustandes zu melden. Die angerufene Auswerteeinrichtung ist beispielsweise eine Notrufzentrale, der bei Anruf durch einen im Bereich eines Gefahrenzustandes vorhandenen Telefonapparates dessen Telefonnummer mitgeteilt wird. In der Auswerteeinrichtung wird diese Telefonnummer mit einer in der Auswerteeinrichtung hinterlegten bekannten Telefonnummer dieses Telefonapparates verglichen. Ergibt dieser Vergleich, daß der Anruf tatsächlich von dem Telefonapparat eingeht, dessen Nummer in der Auswerteeinrichtung hinterlegt ist, wird dieser Telefonanruf als Zustandsmeldung erkannt und es wird nach dieser Erkennung die Einleitung einer Maßnahme bzw. mehrerer Maßnahmen veranlaßt, die zur Aufhebung des Zustandes, insbesondere des Gefahrenzustandes, erforderlich sind. Dabei ist vorher festgelegt worden, welche Maßnahmen bei einem Anruf dieses Telefonapparates zu treffen sind. Der Vorteil des Verfahrens liegt darin, daß bei der angerufenen Auswerteeinrichtung keine Annahme des Gespräches mit dem Ziel erforderlich ist, daß mit dem Anrufenden in einem Gespräch zu klären ist, welcher Gefahrenzustand besteht und welche Maßnahmen nun eingeleitet werden sollen. Dafür ist bei diesem Verfahren vorher bestimmt, welche und nur welche Maßnahmen beim Eingang eines Anrufes von einem bestimmten Telefonapparat zu ergreifen sind.

In Deutschland und auch außerhalb Deutschlands ist jede Telefonnummer einschließlich der Vorwahl nur einmal vergeben. Dadurch ist bedingt, daß ein eingehender Anruf einschließlich der Übertragung der Telefonnummer des Anrufenden einem Telefonapparat mit örtlicher Festlegung genau zugeordnet werden kann. Mißbräuche durch dritte Anrufer und selbst von einem Berechtigten von einem anderen Ort sind nicht möglich. Die bestimmten Maßnahmen werden nur dann ausgelöst, wenn von dem bei der Auswerteeinrichtung vermerkten Telefonapparat aus angerufen wird.

Bei dem erfindungsgemäßen Verfahren wird die Meldung und Auswertung eines Zustandes, insbesondere eines Gefahrenzustandes, vorteilhaft beschleunigt. Das Auswerten eines eingehenden Telefonanrufes kann beispielsweise in der angerufenen Auswerteeinrichtung dadurch erfolgen, daß auf einem Display die Telefonnummer des Anrufenden angezeigt wird. Derartige Displays sind beispielsweise bei ISDN-Telefonen bekannt. Bei einem Übereinstimmen der Telefonnummer mit der in der Auswerteeinrichtung bekannten Telefonnummer kann ohne eine Durchführung eines Gespräches von einem bei der Auswerteeinrichtung Tätigen die Einleitung der erforderlichen Maßnahmen ausgelöst werden.

Nach der Erfindung ist vorgesehen, daß die übertragende Telefonnummer des Telefonapparates in der Auswerteeinrichtung in einem Speicher bereitgestellt wird. Bei dieser Verfahrensausbildung ist nicht erforderlich, daß in der angerufenen Auswerteeinrichtung eine Person die Telefonnummer des anrufenden Telefonapparates erkennt. Vielmehr wird das mit dem Anruf übermittelte digitale Signal zu der Telefonnummer des anrufenden Telefonapparates maschinell ausgewertet. Dazu wird in der Auswerteeinrichtung in geeigneter Weise die bekannte Telefonnummer des anrufenden Telefonapparates gespeichert und im Falle eines Anrufes mit der Telefonnummer des anrufenden Telefonapparates verglichen. Wenn der Anruf von dem Telefonapparat eingeht, der in der Auswerteeinrichtung vermerkt ist, so stimmt dessen Telefonnummer mit der gespeicherten Telefonnummer überein. Wird diese Übereinstimmung festgestellt, so wird automatisch erkannt, daß im Bereich des Telefonapparates ein Gefahrenzustand herrscht und es werden die erforderlichen Maßnahmen eingeleitet. Kommt der Anruf aber von einem anderen Telefonapparat, so kann dessen mitübertragene Telefonnummer nicht mit der gespeicherten Telefonnummer übereinstimmen. In diesem Fall wird automatisch erkannt, daß im Bereich des Telefonapparates, dessen Nummer gespeichert ist, kein Gefahrenzustand vorliegt. Die für diesen Zustand definierten Maßnahmen werden daraufhin nicht eingeleitet.

Die vorgesehene maschinelle Verarbeitung der mit dem Anruf übertragenen bzw. übermittelten Telefonnummer des anrufenden Telefonapparates beschleunigt die Meldung und Auswertung eines Zustandes, insbesondere eines Gefahrenzustandes, weiter. Außerdem kann die Auswertung der eingehenden Telefonnummer von subjektiven Fehlern befreit werden, die immer dann möglich sind, wenn eine Auswertung durch Menschen vorgenommen wird.

Nach einer nächsten Weiterbildung der Erfindung ist vorgesehen, daß die Telefonverbindung zwischen anrufendem Telefonapparat und Auswerteeinrichtung unmittelbar nach Vergleichsdurchführung wieder getrennt wird. Für den Vergleich zwischen der Telefonnummer des anrufenden Telefonapparates und der Telefonnummer, die in der Auswerteeinrichtung bekannt bwz. gespeichert ist, wird eine nur kurze Zeit, beispielsweise wenige Sekunden benötigt. Die Auswertung dieses Vergleiches kann ähnlich schnell erfolgen. Nach Vergleich und Auswertung wird die Telefonverbindung wieder getrennt. Dieses schnelle Trennen bewirkt vorteilhaft, daß die Auswerteeinrichtung wieder telefonisch erreichbar ist, beispielsweise von einem Dritten, bei dem sich gleichfalls ein Gefahrenzustand einstellt.

Eine Vorrichtung zur Durchführung des Verfahrens, für die selbständiger Schutz beansprucht wird, zeichnet sich dadurch aus, daß in der Speichereinheit die Telefonnummer des Telefonapparates abgelegt ist und die mit der Vergleichseinheit zum Vergleich der Telefonnummer des anrufenden Telefonapparates mit der abgespeicherten Telefonnummer vorgesehen ist, wobei ohne Vorhalten eines Operators Auswerteeinrichtung (3) automatisch erkennbar ist, daß im Bereich des Telefonapparates (1) ein Gefahren zustand herrscht und für den Gefahren zustand definierte, vorher festgelegte Maßnahmen einleitbar sind.

Bei dieser Vorrichtung ist es nicht erforderlich, daß der Auswerteeinrichtung eine Person zur Auswertung eingehender Anrufe zugeordnet ist. Die Auswertung kann vielmehr maschinell erfolgen, wodurch sie vorteilhaft schneller und unter Vermeidung subjektiver Fehler durchgeführt werden kann. Die maschinelle Auswertung erfolgt dadurch, daß die Telefonnummer des Telefonapparates, der die Auswerteeinrichtung beispielsweise in einer Notrufzentrale anruft, mit einer in der Speichereinheit für diesen Telefonapparat abgelegten Telefonnummer verglichen wird. Diese Bearbeitungsschritte können beispielsweise von einem Personalcomputer ohne menschliches Zutun durchgeführt werden.

Eine Weiterbildung der erfindungsgemäßen Vorrichtung zeichnet sich dadurch aus, daß als Auslöseeinrichtungen mehrere Telefonapparate vorgesehen sind, die an einem ISDN-Mehrgeräteanschluß angeschlossen sind und die voneinander verschiedene Telefonnummern haben. Durch die ISDN-Technik ist es möglich, an einer oder zwei Telefonleitungen mehrere Telefonapparate mit voneinander verschiedenen Telefonnummern zu betreiben. Beispielsweise können an einem ISDN-Mehrgeräteanschluß zehn Telefonapparate mit zehn verschiedenen Telefonnummern verwendet werden. Für die Durchführung des erfindungsgemäßen Verfahrens kann dadurch bereitgestellt werden, daß den verschiedenen Telefonapparaten verschiedene Zustände, beispielsweise verschiedene Gefahrenzustände, zugeordnet werden. Jeder Telefonnummer eines Telefonapparates dieses Mehrgeräteanschlusses kann aufgrund der Zuordnung eines speziellen Gefahrenzustandes ein verschiedenes Maßnahmepaket zugeordnet sein, daß dann ausgelöst wird, wenn von diesem Telefonapparat die Auswerteeinrichtung angerufen wird.

Die Verbindung von Telefonapparat und Auswerteeinrichtung kann bei der erfindungsgemäßen Vorrichtung nur für eine kurze Zeitdauer von beispielsweise 30 Sekunden erfolgen.
In dieser Zeit ist der Vergleich der Telefonnummer des anrufenden Telefonapparates mit der im Speicher abgelegten Telefonnummer möglich. Nach Trennung der Verbindung ist die Auswerteeinrichtung wieder zur Entgegennahme weiterer Anrufe bereit. Vorteilhaft kann bei der Auswerteeinrichtung die Anzahl der Telefonanschlüsse reduziert werden, weil aufgrund der nur noch kurzen Verbindungen zur Entgegennahme einer Zustandsmeldung eine verringerte Anzahl von Telefonanschlüssen zur Entgegennahme aller eingehenden Anrufe ausreicht. Dadurch können die Kosten für die Telekommunikation auf Seiten der Auswerteeinrichtung vorteilhaft reduziert werden.

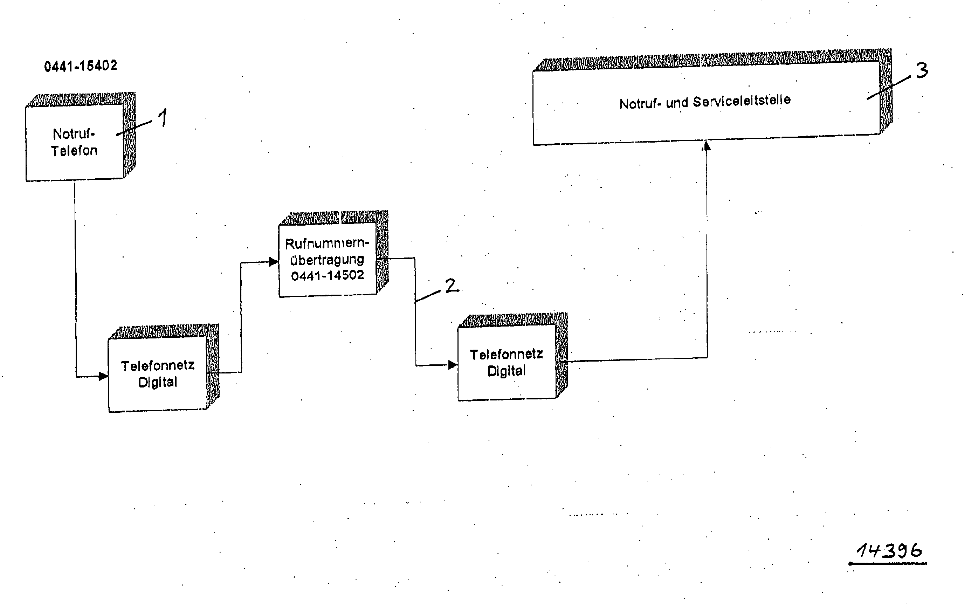

Ein Ausführungsbeispiel der Erfindung ist in der Zeichnung dargestellt. Die einzige Figur der Zeichnung zeigt eine schematische Darstellung einer erfindungsgemäßen Vorrichtung zur Durchführung des Verfahrens zum Melden und Auswerten eines Zustandes, insbesondere eines Gefahrenzustandes.

Die Figur zeigt einen Telefonapparat 1, der über eine Telefonleitung 2 eines digitalen Telefonleitungsnetzes an eine Auswerteeinrichtung 3 angeschlossen ist. An die Auswerteeinrichtung 3 können über weitere Telefonleitungen 2 weitere Telefonapparate 1 angeschlossen sein.

Über die Telefonleitung 2 des digitalen Telefonleitungsnetzes wird die Telefonnummer des bei der Auswerteeinrichtung 3 anrufenden Telefonapparates 1 als digitales Signal übertragen. Diese Telefonnummer wird in der Auswerteeinrichtung 3 mit einer in einem Speicher der Auswerteeinrichtung 3 abgelegten Telefonnummer zu diesem Telefonapparat 1 verglichen. Wird eine Übereinstimmung festgestellt, so wird durch die Auswerteeinrichtung 3 eine Maßnahme bzw. eine Maßnahmenfolge ausgelöst, beispielsweise Maßnahmen eines einem bestimmten Gefahrenzustand zugeordneten Notfallplan.

## Patentansprüche

1. Verfahren zum Melden und Auswerten eines Gefahrenzustandes, wobei zum Melden des gefahren Zustandes ein gewöhnlicher Telefonapparat verwendet wird, bei Eintritt des gefahren Zustandes eine Auswerteeinrichtung angerufen wird, und die über das Telefonleitungsnetz übertragende Telefonnummer des Telefonapparates in der Auswerteeinrichtung mit einer in der Auswerteeinrichtung bekannten Telefonnummer zu dem anrufenden Telefonapparat verglichen wird,
**dadurch gekennzeichnet,**
**daß** in der Auswerteeinrichtung (3) die bekannte Telefonnummer des Telefonapparates (1) in einem Speicher bereitgestellt wird und bei maschinellem Feststelle einer Übereinstimmung beider Telefonnummern ohne Vorhalten eines Operators automatisch erkannt wird, daß im Bereich des Telefonapparates (1) ein Gefahren zustand herrscht und es werden für den Gefahren Zustand definierte, vorher festgelegte Maßnahmen eingeleitet.

2. Verfahren nach Anspruch 1, **dadurch gekennzeichnet, daß** die Telefonverbindung zwischen anrufendem Telefonapparat (1) und Auswerteeinrichtung (3) unmittelbar nach Vergleichsdurchführung wieder getrennt wird.

3. Vorrichtung zur Durchführung des Verfahrens zum Melden und Auswerten eines eines Gefahrenzustandes; mit wenigstens einer Auslöseeinrichtung, einer Übertragungseinrichtung und zumindestens einer Auswerteeinrichtung, wobei
die Auslöseeinrichtung ein gewöhnlicher Telefonapparat (1) ist, die Übertragungseinrichtung ein digitalisiertes Telefonleitungsnetz ist und die Auswerteeinrichtung (3) mit dem Telefonleitungsnetz verbunden ist und zumindestens eine Speichereinheit und zumindestens eine Vergleichseinheit aufweist,
**dadurch gekennzeichnet, daß** in der Speichereinheit die Telefonnummer des Telefonapparates (1) abgelegt ist und die Vergleichseinheit zum Vergleich der Telefonnummer des anrufenden Telefonapparates (1) mit der abgespeicherten Telefonnummer vorgesehen ist, wobei ohne Vorhalten eines Operators mit der Auswerteeinrichtung automatisch erkennbar ist, daß im Bereich des Telefonapparates (1) ein Gefahren zustand herrscht und für den Gefahrenten stand definierte vorher festgelegte Maßnahmen einleitbar sind.

4. Vorrichtung nach Anspruch 3, **dadurch gekennzeichnet, daß** als Auslöseeinrichtungen mehrere Telefonapparate (1) vorgesehen sind, die an einem ISDN-Mehrgeräteanschluß angeschlossen sind und die voneinander verschiedene Telefonnummern haben.

5. Vorrichtung nach Anspruch 3 oder 4, **dadurch gekennzeichnet, daß** für die Verbindung von Telefonapparat (1) und Auswerteeinrichtung (3) eine kurze Zeit von etwa 30 Sekunden vorgesehen ist.

## Claims

1. A method of reporting and evaluating a state of emergency, wherein a normal telephone is used to report the state of emergency, when the state of emergency occurs an evaluator is called and the number of the telephone being transmitted across the telephone network is compared in the evaluator with a telephone number known in the evaluator for the telephone making the call,
**characterised in that**
the known number of the telephone (1) is held in a memory in the evaluator (3) and when the device establishes that the two telephone numbers match it is automatically identified, without an operator being present, that there is a state of emergency in the vicinity of the telephone (1) and certain previously agreed emergency measures are initiated.

2. The method according to claim 1, **characterised in that** the connection between the telephone from which the call is received (1) and the evaluator (3) is disconnected again immediately after the comparison has been made.

3. A device for carrying out the method of reporting and evaluating a state of emergency with at least one release mechanism, a transmission mechanism and at least one evaluator, wherein the release mechanism is a normal telephone (1), the transmission mechanism is a digitised telephone network and the evaluator (3) is connected to the telephone network and has at least one memory unit and at least one comparator unit,
**characterised in that**
the number of the telephone (1) is stored in the memory unit and the comparator unit is provided to compare the number of the telephone from which the call is received with the stored number, wherein it can be identified automatically using the evaluator (3), without an operator being present, that there is a state of emergency in the vicinity of the telephone (1) and certain previously agreed emergency measures are initiated.

4. The device according to claim 3, **characterised in that** several telephones (1) are provided as release mechanisms, which are connected to an ISDN multi-device system and have different telephone numbers from one another.

5. The device according to claim 3 or 4, **characterised in that** a short time of roughly 30 seconds is envisaged for the connection to be made between the telephone (1) and the evaluator (3).

## Revendications

1. Procédé pour signaler et évaluer une situation de danger, dans lequel, pour signaler une situation de danger, un appareil téléphonique usuel est employé, un dispositif d'évaluation est appelé lors de l'entrée dans une situation de danger et le numéro de téléphone de l'appareil téléphonique transmis par l'intermédiaire du réseau de lignes téléphoniques est comparé dans le dispositif d'évaluation avec un numéro de téléphone connu dans le dispositif d'évaluation pour l'appareil téléphonique appelant,
**caractérisé en ce que**
le numéro de téléphone de l'appareil téléphonique (1) connu dans le dispositif d'évaluation (3) est fourni dans une mémoire et, lors d'une détermination automatisée d'une concordance des deux numéros de téléphone, il est reconnu automatiquement sans l'intervention d'un opérateur qu'une situation de danger est présente au niveau de l'appareil téléphonique (1) et que des mesures déterminées au préalable, définies pour la situation de danger doivent être mises en oeuvre.

2. Procédé selon la revendication 1, **caractérisé en ce que** la liaison téléphonique entre l'appareil téléphonique (1) appelant et le dispositif d'évaluation (3) est à nouveau coupée immédiatement après l'exécution de la comparaison.

3. Dispositif afin de mettre en oeuvre le procédé pour signaler et évaluer une situation de danger, comportant au moins un dispositif de déclenchement, un dispositif de transmission et au moins un dispositif d'évaluation, dans lequel le dispositif de déclenchement est un appareil téléphonique (1) usuel, le dispositif de transmission est un réseau de lignes téléphoniques numérique et le dispositif d'évaluation (3) est relié au réseau de lignes téléphoniques et présente au moins une unité de mémoire et au moins une unité de comparaison, **caractérisé en ce que** le numéro de téléphone de l'appareil téléphonique (1) est enregistré dans l'unité de mémoire et l'unité de comparaison est prévue afin de comparer le numéro de téléphone de l'appareil téléphonique (1) appelant avec le numéro de téléphone mémorisé, dans lequel il est reconnu automatiquement sans l'intervention d'un opérateur qu'une situation de danger est présente au niveau de l'appareil téléphonique (1) et que des mesures déterminées au préalable, définies pour la situation de danger doivent être mises en oeuvre.

4. Dispositif selon la revendication 3, **caractérisé en ce que**, en tant que dispositifs de déclenchement, plusieurs appareils téléphoniques (1) sont prévus, lesquels sont raccordés à un raccordement multipostes RNIS et possèdent des numéros de téléphone différents les uns des autres.

5. Dispositif selon la revendication 3 ou 4, **caractérisé en ce que**, pour la liaison de l'appareil téléphonique (1) et du dispositif d'évaluation (3), un temps court d'approximativement 30 secondes est prévu.
